# EUROPEAN PATENT APPLICATION

(11) **EP 4 645 502 A1**
(43) Date of publication of application: **05.11.2025**
(21) Application number: 23912625.3
(22) Date of filing: 01.12.2023
(51) Int. Cl.: H01M 10/0567, H01M 10/052

(54) **ELECTROLYTE ADDITIVE, BATTERY ELECTROLYTE COMPRISING SAME AND SECONDARY BATTERY COMPRISING SAME**

(30) Priority: 26.12.2022 KR 20220184375
(71) Applicant: Soulbrain Co., Ltd., Seongnam-si, Gyeonggi-do 13486 (KR)
(72) Inventor: YU, Weon Ju, Seongnam-si, Gyeonggi-do 13486 (KR); KIM, Bang Han, Seongnam-si, Gyeonggi-do 13486 (KR); CHUNG, Jae Won, Seongnam-si, Gyeonggi-do 13486 (KR); YOO, Dae Hwan, Seongnam-si, Gyeonggi-do 13486 (KR); KIM, Da Hye, Seongnam-si, Gyeonggi-do 13486 (KR)
(74) Representative: Dehns
(86) International application number: PCT/KR2023/019695
(87) International publication number: WO 2024/143950

(57) **Abstract**

The present invention relates to an electrolyte additive and an electrolyte and secondary battery including the same. According to the present invention, the present invention has an effect of providing a secondary battery that is capable of suppressing side reactions inside the battery, improving charging efficiency and output due to low charge resistance, and improving lifespan and high-temperature capacity retention.

## Description

### [Technical Field]

The present invention relates to an electrolyte additive, an electrolyte for batteries including the electrolyte additive, and a secondary battery including the electrolyte, and more particularly, to an electrolyte additive capable of improving the charging efficiency and output of a battery by suppressing internal side reactions of the battery, enabling long-term storage, and increasing a lifespan at high temperatures.

### [Background Art]

In a lithium secondary battery, an electrolyte between a cathode and an anode enables smooth movement of lithium ions, and use of electric energy is promoted according to a method in which electricity is generated or consumed by oxidation-reduction reaction according to intercalation and desorption at the cathode and anode.

Recently, as interest in the environment increases worldwide, environmental regulations are being strengthened. Accordingly, interest in eco-friendly automobiles that can replace internal combustion engine automobiles, which are one of the main causes of air pollution, is also increasing. Accordingly, domestic and foreign battery industries are actively developing automobile batteries.

To use a battery in an automobile, the output and capacity of the battery must be greatly increased, and problems such as a decrease in output and an increase in resistance at high and low temperatures must be solved in consideration of use environments such as weather variations. Particularly, considering that research is underway to reduce the internal resistance and increase the remaining capacity of batteries in connection with the importance of output and driving range performance for electric vehicles, it is necessary to develop a battery capable of suppressing internal side reactions and securing low resistance and long lifespan performance.

### [Related Art Documents]

### [Patent Documents]

KR 2022-0021811 A

### [Disclosure]

### [Technical Problem]

Therefore, the present invention has been made in view of the above problems, and it is one object of the present invention to provide a novel electrolyte additive for batteries, an electrolyte for batteries including the electrolyte additive, and a secondary battery including the electrolyte.

It is another object of the present invention to provide a secondary battery having improved battery output by reducing charge resistance and suppressing internal side reactions in a battery, being capable of long-term storage due to improved recovery capacity at high temperatures, and having excellent lifespan maintenance at high temperatures.

The above and other objects can be accomplished by the present invention described below.

### [Technical Solution]

In accordance with one aspect of the present invention, provided is an electrolyte additive including a compound represented by Chemical Formula 1 below. 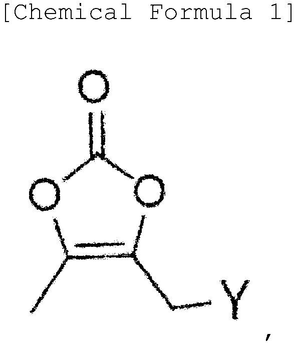 wherein Y is a methacryl group or an ethacryl group.

The compound represented by Chemical Formula 1 may include a compound represented by Chemical Formula 1-1 below. 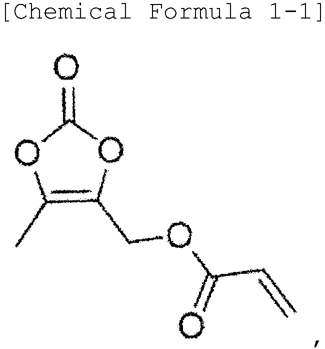 wherein lines are bonds; when a separate element is not indicated, a point where one bond meets another bond is carbon; and the number of hydrogens satisfying a valence of the carbon is omitted.

In accordance with another aspect of the present invention, provided is an electrolyte including an organic solvent, a lithium salt, and an electrolyte additive, wherein the electrolyte additive includes a compound represented by Chemical Formula 1 below. 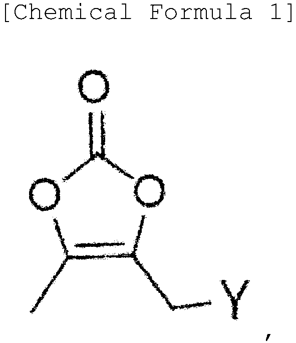 wherein Y is a methacryl group or an ethacryl group.

Based on 100 % by weight in total of the electrolyte, the electrolyte additive may be included in an amount of 0.1 to 10 % by weight.

The organic solvent may include one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

The lithium salt may include one or more selected from the group consisting of LiPF₆, LiF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

The electrolyte may include one or more selected from vinylene carbonate (VC), vinylethylene carbonate (VEC), and fluoroethylene carbonate (FEC).

The electrolyte may include a metal phosphate compound including one or more selected from the group consisting of lithium difluoro(bisoxalato) phosphate, lithium tetrafluoro oxalato phosphate, lithium difluorophosphate, and lithium trioxalato phosphate.

In accordance with yet another aspect of the present invention, provided is a secondary battery, including:
an anode, a cathode, a separator interposed between the anode and the cathode, and an electrolyte,
wherein the electrolyte is the electrolyte described above.

The secondary battery may have a recovery capacity of 740 mAh or more at 60 °C.

The secondary battery may have a resistance increase rate of 150 % or less at 60 °C.

The secondary battery may have a thickness increase rate of 30 % or less at 60 °C.

The secondary battery may be a battery for automobile.

### [Advantageous Effects]

The present invention has an effect of providing a secondary battery including an electrolyte including an electrolyte additive of the present invention. The secondary battery has improved charging efficiency and output by suppressing internal side reactions and reducing charge resistance, has a long lifespan, and has excellent capacity retention at high temperatures.

### [Best Mode]

Hereinafter, the present invention will be described in detail, but the present invention is not limited thereto.

The present inventors have studied a secondary battery having improved output by suppressing internal side reactions in the battery and having excellent recovery capacity and lifespan characteristics at high temperatures to manufacture an automobile battery. While conducting the above research, the present inventors confirmed that all of the above objects were achieved when an additive having a specific structure was added to an electrolyte of a secondary battery. Based on these results, the present inventors conducted further studies to complete the present invention.

The electrolyte additive according to embodiments of the present invention is characterized by including a compound represented by Chemical Formula 1 below. In this case, internal side reactions of the battery may be suppressed, charge resistance of the secondary battery may be reduced, charging efficiency and output may be improved, and lifespan and high-temperature capacity retention may be excellent.

An electrolyte additive includes the compound represented by Chemical Formula 1 below.

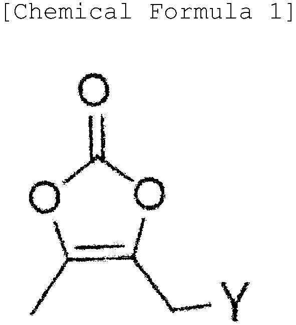

In Chemical Formula 1, Y is a methacryl group or an ethacryl group.

Chemical Formula 1 may be an asymmetrical structure including a methacryl group or an ethacryl group. In this case, internal side reactions of the battery may be suppressed, charge resistance of the secondary battery may be reduced, charging efficiency and output may be improved, and lifespan and high-temperature capacity retention may be excellent.

The compound represented by Chemical Formula 1 may preferably include a compound represented by Chemical Formula 1-1 below. In this case, internal side reactions of the battery may be suppressed, charging efficiency and output may be improved due to low charge resistance of the secondary battery, and lifespan and high-temperature capacity retention may be excellent.

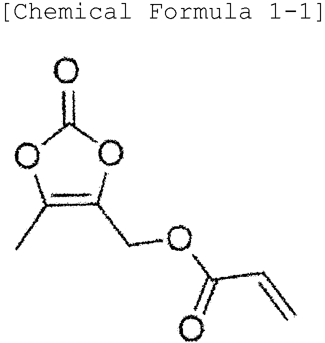

In Chemical Formula 1-1, lines are bonds; when a separate element is not indicated, a point where one bond meets another bond is carbon; and the number of hydrogens satisfying the valence of the carbon is omitted.

As a result of energy level measurement, in the electrolyte additive represented by Chemical Formula 1, the HOMO level significantly increased and the LUMO level significantly decreased compared to ethylene carbonate (HOMO: 10.39, LUMO: 1.41). It is predicted that when the electrolyte additive is added to an electrolyte, an oxidation-reduction amphoteric reaction will be effectively induced (see the compound represented by Chemical Formula 1 (HOMO: -8.97, LUMO: 0.43)).

That is, a stable protective film is formed through an interfacial film reaction between the cathode and the anode, thereby suppressing direct side reactions between the electrode and electrolyte.

The generated protective film component may improve the mobility of lithium ions due to the delocalized ester bond structure.

Additional decomposition of the electrolyte may be prevented due to the stability of the film, and thus cycle characteristics may be improved. In particular, compared to conventional electrode films that decompose at high temperatures and have low high-temperature storage properties, the film does not decompose at high temperatures and thus has excellent high-temperature storage properties.

In addition, resistance increase may be prevented, and thus charging efficiency and output may be improved. In addition, the safety of a battery may be improved because gas generation due to chemical reaction inside the battery is suppressed. In addition, structural collapse of the electrode active materials of a cathode and an anode may be prevented at high temperatures, thereby improving capacity retention, thereby obtaining the effect of increasing a lifespan.

Based on 100 % by weight in total of the battery electrolyte, the electrolyte additive represented by Chemical Formula 1 may be included in an amount of 0.1 to 10 % by weight, preferably 0.2 to 7 % by weight, more preferably 0.2 to 5 % by weight, most preferably 0.2 to 2 % by weight. Within this range, the charging efficiency of the battery may be excellent, and an effect of increasing a lifespan at high temperatures may be obtained.

In addition, the present invention provides an electrolyte including the electrolyte additive of the present invention. The electrolyte is an electrolyte of a non-aqueous lithium secondary battery, and includes the electrolyte additive, an organic solvent, and a lithium salt.

For example, the organic solvent may be a carbonate-based organic solvent, and specifically, may be an organic solvent including one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

For example, the organic solvent may be a single solvent or a mixed solvent prepared by mixing two or more solvents. Preferably, a mixed solvent prepared by mixing an organic solvent having a high dielectric constant and high ionic conductivity used to increase the charge/discharge performance of a battery and a low-viscosity organic solvent capable of adjusting the viscosity of a solvent to be suitable for application to the battery may be used.

For example, the organic solvent having a high dielectric constant may include EC and PC, the low-viscosity organic solvent may include EMC, DMC, and DEC, and the organic solvent having a high dielectric constant and the low-viscosity organic solvent are preferably mixed in a volume ratio of 2:8 to 8:2. More specifically, a ternary mixed solvent of EC or PC, EMC, and DEC may be used, and the ratio of EC or PC to EMC and DEC may be 1 to 3 : 3 to 5 : 3 to 5.

When the organic solvent contains moisture, lithium ions in the electrolyte may be hydrolyzed. Accordingly, the amount of moisture in the organic solvent is preferably adjusted to 150 ppm or less, preferably 100 ppm or less.

A compound capable of providing lithium ions used in a lithium secondary battery may be used as the lithium salt without particular limitation. Specifically, the lithium salt may include one or more selected from the group consisting of LiPF₆, LiBF₄, LiCl, LiBr, LiI, LiClO₄, LiB₁₀Cl₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi, preferably LiPF₆.

When the lithium salt is dissolved in an electrolyte, the lithium salt functions as a source of lithium ions in a lithium secondary battery and may promote the movement of lithium ions between a cathode and an anode. Accordingly, the lithium salt is preferably included in a concentration of about 0.6 mol% to 2 mol% in the electrolyte. When the concentration of the lithium salt is less than 0.6 mol%, the conductivity of the electrolyte may be reduced, resulting in poor electrolyte performance. When the concentration of the lithium salt exceeds 2 mol%, the viscosity of the electrolyte may increase, which reduces the mobility of lithium ions. Considering the conductivity of the electrolyte and the mobility of lithium ions as described above, the lithium salt may be included in the electrolyte in an amount of preferably 0.7 mol% to 1.6 mol%, more preferably 0.8 mol% to 1.5 mol%.

For example, in addition to the electrolyte additive represented by Chemical Formula 1, the electrolyte of the present invention may further include additives (hereinafter, referred to as other additives) that may be generally used in an electrolyte for the purpose of suppressing internal side reactions of the battery, improving lifespan characteristics of the battery, suppressing a decrease in battery capacity, and improving the discharge capacity of the battery.

Preferred specific examples of the above-described other additives may include one or more selected from the group consisting of vinylene carbonate, fluoroethylene carbonate, vinyl ethylene carbonate, ethyl propionate, propyl propionate, succinic anhydride, tetravinylsilane, hexamethylenetetramine, 1,1,2,2-tetrafluoroethyl 2,2,2-trifluoroethyl ether, 1,2-bis((difluorophosphaneyl)oxy)ethane, 1,3,6-hexanetricarbonitrile, succinonitrile, 1-ethyl-3-methylimidazolium dicyanamide, trimethoxyboroxine, lithium bis(oxaleto)borate, lithium difluro(oxalato) borate, tris(trimethylsilyl) borate, lithium tetrafluoroborate, triisopropyl borate, lithium tetrafluro(oxalato) phosphate, lithium difluro(bisoxalato) phosphate, lithium difluorophosphate, diethyl (difluoromethyl)phosphonate, tris(trimethylsilyl) phosphite, tripropagyl phosphate, 2,4,8,10-tetraoxa-3,9-dithiaspiro[5.5]undecane 3,3,9,9-tetraoxide, dimethyl sulfate, ethylene dimethanesulfonate, methylene methyl disulfonate, lithium bis(fluorosulfonyl)imide, 3-fluoro-1,3-propansulton, ethylene sulfate, 1-propene-1,3-sultone, 1,3-propylene sulfate, 1,4-butane sultone, sulfolene, biphenyl, cyclohexyl benzene, 4-fluorotoluene, triphenyl phosphate, fluorobenzene, and 2-fluoro-biphenyl.

The other additives are added to suppress internal side reactions of a battery and improve resistance and lifespan. The other additives may be included in the electrolyte in an amount of 0.3 to 3 % by weight, preferably 0.7 to 1.5 % by weight. When the content of the metal other additives satisfies the range, the high-temperature characteristics and cycle characteristics of the battery may be improved.

The other additives are additionally included in the compound represented by Chemical Formula 1. When only other additives were injected without the compound represented by Chemical Formula 1, the improvement effect on a long lifespan and low resistance was poor, as confirmed through Comparative Example 1 described below.

As another preferred example, the other additives may include a metal phosphate compound.

The metal phosphate compound may include one or more selected from the group consisting of lithium difluoro(bisoxalato) phosphate (LiDFOP), lithium tetrafluoro oxalato phosphate (LiTFOP), lithium difluorophosphate, and lithium trioxalato phosphate.

The metal phosphate compound is added to improve the performance of a lithium secondary battery, a lithium ion capacitor, or the like, and may be included in an electrolyte in an amount of 0.3 to 1.5 % by weight, preferably 0.7 to 1.2 % by weight. When the content of the metal phosphate compound satisfies the above range, the low-temperature characteristics and cycle characteristics of a battery may be improved.

A secondary battery of the present invention includes an anode, a cathode, a separator interposed between the anode and the cathode, and the electrolyte.

For example, the cathode may be prepared by obtaining a composition for forming a cathode active material layer by mixing a cathode active material, a binder, and optionally a conductive agent, and then applying the composition to a cathode current collector such as aluminum foil.

For example, as the cathode active material, a conventional lithium nickel manganese cobalt oxide (NCM, LiNiMnCoO₂) cathode active material used in lithium secondary batteries may be used. Specifically, the cathode active material may be a lithium composite metal oxide represented by a chemical formula of Li [NixCo_{1-x-y}Mn_{y}]O₂ (0<x<0.9, 0<y<0.1), but the present invention is not limited thereto.

For example, in the chemical formula of Li[NixCo_{1-x-y}Mn_{y}]O₂ representing the lithium composite metal oxide, the variables x and y may be 0.0001<x<0.9, 0.0001<y<0.1, or 0.001<x<0.5, 0.001<y<0.3.

As another example, a compound (lithiated intercalation compound) capable of reversible intercalation and deintercalation of lithium may be used as the cathode active material.

To improve the capacity characteristics and stability of a battery, among the compounds, one or more selected from the group consisting of LiCoO₂, LiMnO₂, LiMn₂O₄, LiNiO₂, LiNiₓMn₍₁₋ₓ₎O₂ (0<x<1), and LiM1ₓM2_{y}O₂ (0≤x≤1, 0≤y≤1, 0≤x+y≤1, and M1 and M2 are each independently one selected from the group consisting of Al, Sr, Mg, and La) may be used.

For example, the anode may be prepared by obtaining a composition for forming an anode active material layer by mixing an anode active material, a binder, and optionally a conductive agent, and then applying the composition to an anode current collector such as copper foil.

For example, as the anode active material, a compound capable of reversible intercalation and deintercalation of lithium may be used.

As a specific example, the anode active material may include carbonaceous materials such as artificial graphite, natural graphite, graphitized carbon fiber, and amorphous carbon. In addition to the carbonaceous materials, a metallic compound capable of alloying with lithium or a composite including a metallic compound and a carbonaceous material may also be used as the anode active material. For example, graphite may be used as the anode active material. Preferably, an anode active material including a composite compound including Si, specifically SiO and SiC may be used.

For example, as the metal capable of alloying with lithium, any one of Si, Al, Sn, Pb, Zn, Bi, In, Mg, Ga, Cd, Si alloy, Sn alloy, and Al alloy may be used.

In addition, a metallic lithium thin film may be used as the anode active material. As the anode active material, at least one selected from the group consisting of crystalline carbon, amorphous carbon, carbon composites, lithium metal, and lithium-containing alloys, known to have high stability, may be used.

In addition to the conventional compound added to the electrolyte to improve the performance of a conventional battery, since the electrolyte additive represented by Chemical Formula 1 is added to the secondary battery of the present invention, compared to a case of adding a conventional electrolyte additive, the secondary battery of the present invention may have an effect of further improving battery characteristics such as battery charge resistance (60 °C) measured by hybrid pulse power characterization (HPPC), output characteristics, capacity recovery characteristics at high temperatures, and lifespan characteristics at 45 °C.

Specifically, the secondary battery of the present invention may have an HPPC charge resistance value of 500 mΩ or less, preferably 200 mΩ or less, more preferably 90 mΩ, most preferably 80 mΩ or less as measured at 60 °C.

In the present disclosure, the HPPC charge resistance value may be measured by the method prescribed in the literature "Battery test manual for plug-in hybrid electric vehicles (2010, Idaho National Laboratory for the U.S. Department of Energy)", and is an important index representing the output characteristics of a battery. In addition, the charge resistance is a resistance value measured during charging of a battery. As the charge resistance decreases, energy loss is reduced, thereby increasing a charging speed, and improving the output of a battery. The secondary battery of the present invention has a low HPPC charge resistance value, and has a high charging speed and excellent output. Due to these advantages, for example, the secondary battery of the present invention is suitable for use as an automobile battery.

The secondary battery may have a recovery capacity of 740 mAh or more, preferably 750 mAh or more, more preferably 770 mAh or more at 60°C.

In the present disclosure, the recovery capacity represents the capacity retention characteristics of a battery that has been left unattended for a long period of time. The recovery capacity may be obtained by measuring and comparing discharged electric capacity when a battery left for a long time is discharged to a discharge final voltage and discharged electric capacity when the discharged battery is recharged and discharged again to the discharge final voltage. As the recovery capacity increases, the amount of natural discharge due to battery preservation (storage) decreases, which means that a battery may be preserved for a long time. In particular, as the storage temperature of a battery increases, spontaneous discharge rate increases. Thus, recovery capacity at high temperatures is a very important characteristic of automotive batteries. When the electrolyte additive of the present invention is added to an electrolyte for batteries, the recovery capacity is increased by 5 to 15 % compared to a case of using only a conventional additive, and thus long-term storage is possible with only one charge.

The secondary battery may have a resistance increase rate of 150 % or less, preferably 135 % or less, more preferably 115 % or less at 60 °C.

The secondary battery may have a thickness increase rate of 30 % or less, preferably 28 % or less, more preferably 26 % or less at 60 °C.

The secondary battery may have a lifespan maintenance efficiency of 80 % or more, preferably 83 % or more, more preferably 85 % or more at 45 °C.

Therefore, when the battery of the present invention is used as a battery for automobiles, output dependent on the size of an automobile may be improved. In addition, performance at low and high temperatures associated with climate change and direct exposure to sunlight while driving or parked may be improved. Thus, the battery of the present invention may exhibit excellent performance as a battery for automobiles.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

### Example 1

As an organic solvent, a carbonate-based mixed solvent with a volume ratio of EC:EMC:CEC = 2:4:4 was used, and 0.25 % by weight of the compound represented by Chemical Formula 1-1 was added to a solution containing LiPF₆ as lithium salt at a concentration of 1.15 M to manufacture an electrolyte for batteries.

### Example 2

As an organic solvent, a carbonate-based mixed solvent with a volume ratio of EC:EMC:CEC = 2:4:4 was used, and 0.5 % by weight of the compound represented by Chemical Formula 1-1 was added to a solution containing LiPF₆ as lithium salt at a concentration of 1.15 M to manufacture an electrolyte for batteries.

### Example 3

As an organic solvent, a carbonate-based mixed solvent with a volume ratio of EC:EMC:CEC = 2:4:4 was used, and 1.0 % by weight of the compound represented by Chemical Formula 1-1 was added to a solution containing LiPF₆ as lithium salt at a concentration of 1.15 M to manufacture an electrolyte for batteries.

### Example 4

As an organic solvent, a carbonate-based mixed solvent with a volume ratio of EC:EMC:CEC = 2:4:4 was used, and 1.5 % by weight of the compound represented by Chemical Formula 1-1 was added to a solution containing LiPF₆ as lithium salt at a concentration of 1.15 M to manufacture an electrolyte for batteries.

### Comparative Example 1

As an organic solvent, a carbonate-based mixed solvent with a volume ratio of EC:EMC:CEC = 2:4:4 was used, and 1.5 % by weight of fluoroethylene carbonate, instead of the compound represented by Chemical Formula 1-1, was added to a solution containing LiPF₆ as lithium salt at a concentration of 1.15 M to manufacture an electrolyte for batteries.

### Comparative Example 2

The same procedure as in Example 1 was performed except that the compound represented by Chemical Formula 1-1 as the electrolyte additive was not added.

### Manufacture of battery

92 % by weight of Li (Ni_{0.5}Co_{0.2}Mn_{0.3})O₂ as a cathode active material, 4 % by weight of carbon black as a conductive agent, and 4 % by weight of polyvinylidene fluoride (PVdF) as a binder were added to N-methyl-2-pyrrolidone (NMP) as a solvent to prepare cathode mixture slurry. The cathode mixture slurry was applied to an aluminum (Al) thin film having a thickness of about 20 µm as a cathode current collector. Then, the thin film was dried, and then subjected to roll press to manufacture a cathode.

89 % by weight of carbon powder as an anode active material, 7 % by weight of an SiO compound, 3 % by weight of PVdF as a binder, and 1 % by weight of carbon black as a conductive agent were added to NMP as a solvent to prepare anode mixture slurry. The anode mixture slurry was applied to a copper (Cu) thin film having a thickness of 10 µm as an anode current collector. Then, the thin film was dried, and then subjected to roll press to manufacture an anode.

A pouch-type battery was manufactured according to a conventional method using the manufactured cathode and anode and a separator composed of three layers of polypropylene/polyethylene/polypropylene (PP/PE/PP). Then, the electrolytes prepared in Examples 1 to 4 and Comparative Examples 1 and 2 were injected into the pouch-type battery to manufacture lithium secondary batteries.

### Test Examples

The performance of the manufactured secondary batteries was evaluated according to the following methods, and the results are shown in Table 1 below.

### [Evaluation of HPPC charge resistance]

HPPC charge resistance was measured according to the method prescribed in the literature "Battery test manual for plug-in hybrid electric vehicles (2010, Idaho National Laboratory for the U.S. Department of Energy)".

At 60 °C, a measurement voltage value, a charge/discharge current value corresponding to C-rate, current change (ΔI), discharge voltage change (ΔV), charge voltage change (ΔV), discharge resistance, and charge resistance were measured. A resistance increase rate value was calculated using a slope value obtained from change in current and voltage by briefly flowing charge/discharge current for each C-rate for a certain period of time.

### [Evaluation of high-temperature recovery capacity]

According to the charging conditions, charging was performed at a constant current of 1.0 C and a voltage of 4.2 V until charging current became 1/10 C. According to the discharging conditions, after performing charging and discharging by discharging to 3.0 V at a constant current of 1.0 C, discharge capacity was measured.

After charging was performed under the same charging and discharging conditions, the battery was stored in a thermostat at 60 °C for 4 weeks, and then discharged to a discharge voltage of 3 V. Then, the remaining capacity was measured.

### [Evaluation of high-temperature lifespan]

The secondary battery was charged with constant current at 45 °C at a current of 1 C rate until voltage reached 4.20 V (vs. Li), and then cut off at a current of 0.05 C rate while maintaining 4.20 V in a constant voltage mode. Subsequently, discharge was performed at a constant current of 1 C rate until voltage reached 3.0 V (vs. Li) during discharge (1st cycle). The above cycle was repeated 300 times, and the average value thereof was calculated.

**[Table 1]**

| Classification | Electrolyte additive (wt%) | | Initial discharge DC-IR (mΩ) | Discharge DC-IR increase rate (%) | High-temperature recovery capacity (mAh) | Thickness increase rate (%) |
|---|---|---|---|---|---|---|
| Example 1 | Chemical Formula 1 | 0.25 | 32.3 | 112.9 | 750.5 | 25.0 |
| Example 2 | Chemical Formula 1 | 0.5 | 29.3 | 92.2 | 767.4 | 23.8 |
| Example 3 | Chemical Formula 1 | 1 | 29.0 | 89.2 | 777.9 | 23.4 |
| Example 4 | Chemical Formula 1 | 1.5 | 28.0 | 95.5 | 780.5 | 26.2 |
| Comparative Example 1 | FEC | 1.5 | 30.7 | 394.6 | 715.2 | 37.2 |
| Comparative Example 2 | No add | - | 30.0 | 407.5 | 704.4 | 35.2 |

As shown in Table 1, in the case of Examples 1 to 4 using the electrolyte additive of the present invention, compared to Comparative Example 1 in which the electrolyte additive was replaced with another anode-type additive or Comparative Example 2 in which the electrolyte additive was not used, the initial discharge resistance, resistance increase rate, high-temperature recovery capacity, and thickness increase rate were all improved.

In addition, when the electrolyte additive of the present invention is added in an excessive amount within an appropriate range, the initial discharge resistance, resistance increase rate, high-temperature recovery capacity, and thickness increase rate were improved.

In particular, a significant difference was observed in the high-temperature recovery capacity. The electrolyte additive used in the present invention formed an effective protective film on the cathode and anode. In addition, the electrolyte additive improved the recovery capacity and capacity retention rate by suppressing side reactions between the electrolyte and the electrode.

For reference, it is known that when the transition metal of the cathode is eluted, the eluted metal ions are deposited on the anode surface, or when the irreversible Li ions increase due to the interfacial side reaction between the cathode and the anode, it leads to a decrease in capacity.

In addition, as a result of measuring the thickness change of a battery before and after high-temperature storage, it was confirmed that the electrolyte additive of the present invention significantly suppresses the oxidation/reduction decomposition of the electrolyte, thereby also having the effect of reducing the amount of gas generated.

Therefore, when applying the electrolyte additive according to the examples of the present invention and the electrolyte containing the same to a secondary battery, by suppressing internal side reactions of the battery, a reduction in gas generation could be achieved. In addition, charge resistance, output, recovery capacity, and lifespan efficiency were improved. Accordingly, it was found that the electrolyte additive and the electrolyte containing the same are applicable to a secondary battery for automobiles.

## Claims

1. An electrolyte additive comprising a compound represented by Chemical Formula 1 below. 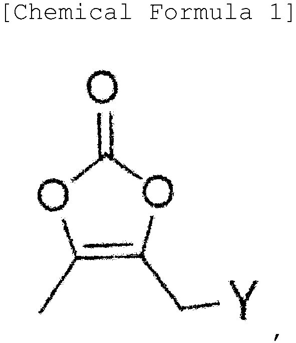 wherein Y is a methacryl group or an ethacryl group.

2. The electrolyte additive according to claim 1, wherein Y is a methacryl group.

3. The electrolyte additive according to claim 1, wherein the compound represented by Chemical Formula 1 comprises a compound represented by Chemical Formula 1-1 below. 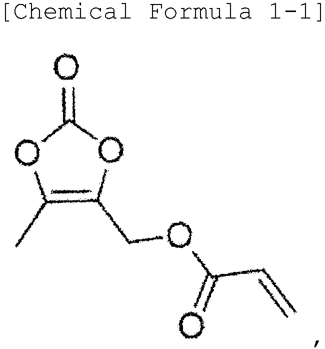 wherein lines are bonds; when a separate element is not indicated, a point where one bond meets another bond is carbon; and the number of hydrogens satisfying a valence of the carbon is omitted.

4. An electrolyte comprising an organic solvent, a lithium salt, and an electrolyte additive,
wherein the electrolyte additive comprises a compound represented by Chemical Formula 1 below. 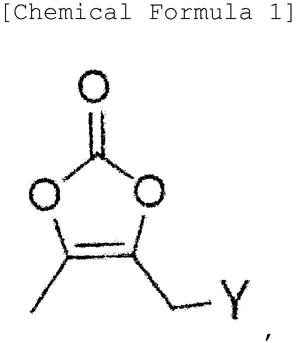
wherein Y is a methacryl group or an ethacryl group.

5. The electrolyte according to claim 4, wherein, based on 100 % by weight in total of the electrolyte, the electrolyte additive is comprised in an amount of 0.1 to 10 % by weight.

6. The electrolyte according to claim 4, wherein the organic solvent comprises one or more selected from the group consisting of ethylene carbonate (EC), diethyl carbonate (DEC), ethylmethyl carbonate (EMC), dimethyl carbonate (DMC), propylene carbonate (PC), dipropyl carbonate (DPC), butylene carbonate, methylpropyl carbonate, and ethylpropyl carbonate.

7. The electrolyte according to claim 4, wherein the lithium salt comprises one or more selected from the group consisting of LiPF₆, LiF₄, LiCl, LiBr, LiI, LiClO₄, LiB₁₀Cl ₁₀, LiCF₃SO₃, LiCF₃CO₂, LiAsF₆, LiSbF₆, LiAlCl₄, CH₃SO₃Li, CF₃SO₃Li, and (CF₃SO₂)₂NLi.

8. The electrolyte according to claim 4, wherein the electrolyte comprises one or more selected from vinylene carbonate (VC), vinylethylene carbonate (VEC), and fluoroethylene carbonate (FEC).

9. The electrolyte according claim 4, wherein the electrolyte comprises a metal phosphate compound comprising one or more selected from the group consisting of lithium difluoro(bisoxalato) phosphate, lithium tetrafluoro oxalato phosphate, lithium difluorophosphate, and lithium trioxalato phosphate.

10. A secondary battery comprising an anode, a cathode, a separator interposed between the anode and the cathode, and an electrolyte,
wherein the electrolyte is the electrolyte according to any one of claims 4 to 9.

11. The secondary battery according to claim 10, wherein the secondary battery has a recovery capacity of 740 mAh or more at 60 °C.

12. The secondary battery according to claim 10, wherein the secondary battery has a resistance increase rate of 150 % or less at 60 °C.

13. The secondary battery according to claim 10, wherein the secondary battery has a thickness increase rate of 30 % or less at 60 °C.

14. The secondary battery according to claim 10, wherein the secondary battery is a battery for automobiles.
